# EUROPEAN PATENT APPLICATION

(11) **EP 1 726 467 A1**
(43) Date of publication of application: **29.11.2006**
(21) Application number: 05425380.2
(22) Date of filing: 27.05.2005
(51) Int. Cl.: B60J 3/02

(54) **Sunshade unit for motor-vehicles with a shape memory actuator**

(71) Applicant: C.R.F. Società Consortile per Azioni, 10043 Orbassano (Torino) (IT)
(72) Inventor: Butera, Francesco, 10123 Torino (IT); Alacqua, Stefano, 10090 Rivoli, Cascine Vica (IT); Zanella, Alessandro, 10136 Torino (IT)
(74) Representative: Notaro, Giancarlo

(57) **Abstract**

A sunshade unit for a motor vehicle comprises a sunshade (3) mounted so that it can be displaced between an inoperative position and an operative position with respect to a supporting structure, and a shape-memory actuator (9; 9a, 9b) for controlling movement of the sunshade.

## Description

The present invention relates to a sunshade unit for a motor vehicle, of the type comprising a sunshade mounted so that it can be displaced between an inoperative position and an operative position with respect to a supporting structure.

With a view to providing a sunshade unit with power-driven movement and at the same time having an extremely simple structure and being of reduced overall dimensions, the subject of the invention is a sunshade unit of the type specified above, characterized in that it comprises a shape-memory actuator for controlling movement of the sunshade between its inoperative position and its operative position.

The shape-memory actuating means can be of the type in which a shape-memory actuator element controls movement of the sunshade only from its inoperative position to its operative position, engagement means being provided for withholding the sunshade in its operative position once this has been reached so as to enable de-activation of the shape-memory actuator element. In the case of said solution, there are provided means for de-activation of the aforesaid engagement means and elastic means, which recall the sunshade towards its inoperative position.

In an alternative solution, a first shape-memory actuator element and a second shape-memory actuator element are provided for controlling movement of the sunshade into its operative position and into its inoperative position, respectively. According to yet a further alternative solution, the shape-memory actuating means are of the bistable type, i.e., of the type in which upon each successive activation they bring about a movement from the position that the sunshade occupies, whether this be the operative position or the inoperative position, into the opposite position.

The sunshade can be prearranged in such a way that it has a movement of sliding between its inoperative position and its operative position with respect to guides provided in the roof of the motor vehicle.

Alternatively, and in a way more similar to the conventional solution, the sunshade is mounted oscillating about an axis defined by a supporting pin.

Activation of the shape-memory actuator elements is advantageously obtained by providing electronically controlled electrical-supply means, which cause a passage of electric current through the actuator element, heating it by the Joule effect.

Further characteristics and advantages of the present invention will emerge from the ensuing description, with reference to the plate of drawings, which is provided purely by way of non-limiting example, and in which:
- Figure 1 is a perspective view of a motor vehicle provided with a sunshade unit according to the invention;
- Figure 2 is a schematic perspective view of a first embodiment of the unit according to the invention;
- Figure 3 is a schematic side view of the unit of Figure 2; and
- Figures 4 are 5 are schematic perspective views that illustrate a sunshade unit according to a second embodiment of the present invention in the two different operative conditions.

With reference to the plate of drawings, a motor vehicle 1 is provided with a sunshade unit 2 according to the present invention.

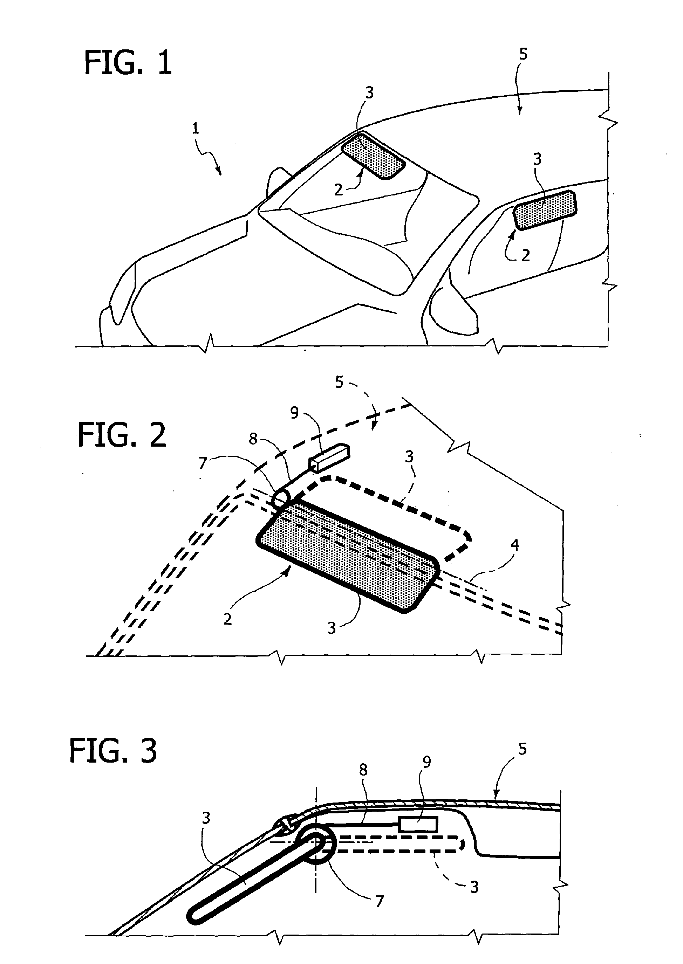

In the solution of Figures 2 and 3, the sunshade unit comprises a sunshade 3 mounted oscillating about an axis 4 transverse to the longitudinal direction of the motor vehicle, on the structure of the roof 5 of the motor vehicle by means of a rotatable supporting pin 6. Mounted on the pin 6 is a wheel 7 wound on which is a wire 8 controlled by a shape-memory actuating device 9. The actuator device 9 can, for example, be in the form of a bistable actuator of the type described and illustrated in the preceding European patent application EP 04425314.4 filed in the name of the present applicant, which causes displacement of the sunshade from the inoperative position into the operative position, or vice versa, at each successive activation.

In an alternative solution, the device 9 basically comprises a shape-memory wire which is activated by causing passage through it of an electric current so as to heat it by the Joule effect. In this way, the shape-memory wire is contracted so causing application of a tensile force on the wire 8 and consequently a rotation of the sunshade 3 from its inoperative position into its operative position. In the latter position, the sunshade is withheld via engagement means of any type (not illustrated), possibly also shape-memory means, associated to the rotatable supporting pin 6. In this way, the supply of electric current to the actuator device 9 can be interrupted, without this causing a return of the sunshade into its inoperative position. When, instead, the aim is to bring the sunshade 3 back again into its inoperative position, the aforesaid engagement means are de-activated, by acting on a mechanical or electro-mechanical transmission of any known type so as to enable return of the sunshade 3 into its operative position under the effect of a return spring (not illustrated), which is also associated to the rotatable supporting pin 6.

Consequently, in the case of the solution of Figures 2 and 3, the shape-memory actuator is used only to bring about displacement of the sunshade from its inoperative position to its operative position, whilst the aforesaid elastic means bring the sunshade back again into its inoperative position when the means that engage the sunshade in its operative position are de-activated.

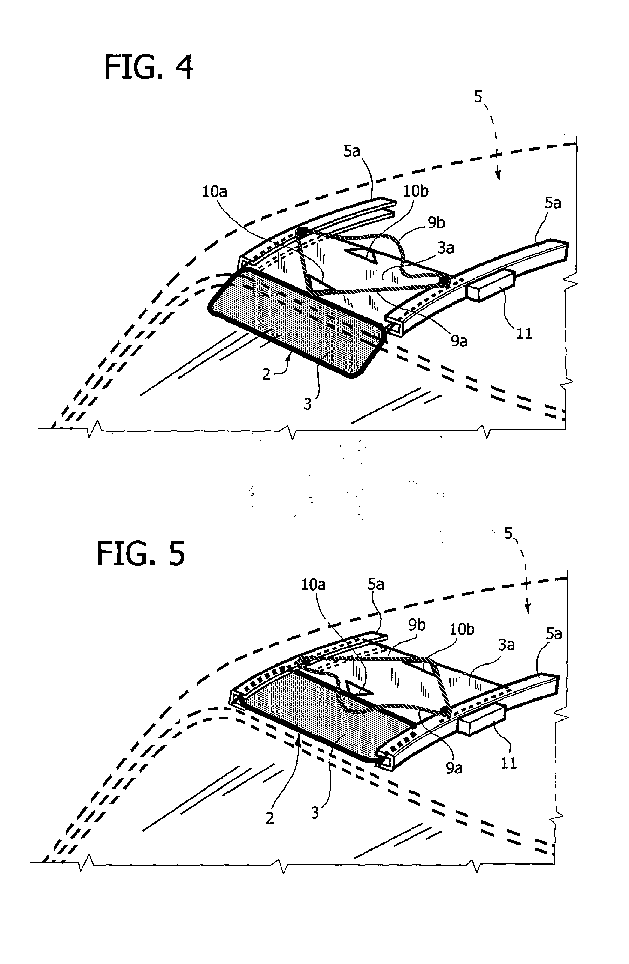

Figures 3 and 4 illustrate a further embodiment in which the sunshade 3 is associated to a frame 3a slidably mounted within the structure of the roof 5 between two longitudinal guides 5a and displaceable into the operative position or into the inoperative position of the sunshade by means of activation of a first shape-memory wire 9a or of a second shape-memory wire 9b, respectively. In the operative condition of the sunshade 3 (illustrated in Figure 4) the shape-memory wire 9a is tensioned, having the opposite ends connected to the fixed structure of the roof. By supplying electric current through the shape-memory wire 9a there is brought about contraction thereof, with consequent sliding of the unit formed by the sunshade 3 and the frame 3a within the roof as far as the position illustrated in Figure 5, in which a second support 10b of the frame 3a sets the second shape-memory wire 9b in tension. Starting from said condition, an activation of the wire 9b causes a movement of the sunshade towards the extracted position illustrated in Figure 4. The supply of current to the two shape-memory wires 9a, 9b is controlled by an electronic control unit 11 associated to the device.

Furthermore, preferably set between the frame 3a and the structure of the roof is an elastic bistable lamina or strip (not illustrated), which helps movement of the sunshade 3 into its extracted position or else into its retracted position, whenever the frame 3a exceeds a dead-point position.

Of course, without prejudice to the principles of the invention, the details of construction and the embodiments may vary widely with respect to what is described and illustrated herein purely by way of example, without thereby departing from the scope of the present invention.

## Claims

1. A sunshade unit for a motor vehicle, comprising a sunshade (3) mounted so that it can be displaced between an inoperative position and an operative position with respect to a supporting structure (5), said unit being **characterized in that** it comprises a shape-memory actuator (9; 9a; 9b) for controlling movement of the sunshade.

2. The sunshade unit according to Claim 1, **characterized in that** the shape-memory actuator is provided for controlling movement of the sunshade only from its inoperative position to its operative position, said unit further comprising: engagement means for withholding the sunshade in its operative position once this has been reached, so as to enable de-activation of the shape-memory actuator element; means for de-activation of the aforesaid engagement means; and elastic means that recall the sunshade towards its inoperative position.

3. The sunshade unit according to Claim 1, **characterized in that** a first shape-memory actuator element and a second shape-memory actuator element are provided for controlling, respectively, the movement of the sunshade into its operative position and into its inoperative position.

4. The sunshade unit according to Claim 1, **characterized in that** the shape-memory actuator is of a bistable type, designed to cause at each successive activation a movement from the position that the sunshade occupies, whether this be the operative position or the inoperative position, to the opposite position.

5. The sunshade unit according to Claim 1, **characterized in that** the sunshade is slidably mounted between its inoperative position and its operative position with respect to guides provided in the roof of the motor vehicle.

6. The sunshade unit according to Claim 1, **characterized in that** the sunshade is mounted oscillating about an axis defined by a supporting pin.

7. The sunshade unit according to Claim 1, **characterized in that** it comprises electronically controlled electrical-supply means, which cause a passage of electric current through the actuator element, heating it by the Joule effect.
